# EUROPÄISCHE PATENTSCHRIFT

(11) **EP 2 203 837 B1**
(45) Veröffentlichungstag und Bekanntmachung des Hinweises auf die Patenterteilung: **01.10.2014**
(21) Anmeldenummer: 08842673.9
(22) Anmeldetag: 09.10.2008
(51) Int. Cl.: G06F 13/42

(54) **SERVER MIT EINER SCHNITTSTELLE ZUM ANSCHLUSS AN EIN SERVERSYSTEM UND SERVERSYSTEM**
SERVER HAVING AN INTERFACE FOR CONNECTING TO A SERVER SYSTEM AND SERVER SYSTEM
SERVEUR AVEC UNE INTERFACE DE RACCORDEMENT À UN SYSTÈME DE SERVEURS, ET SYSTÈME DE SERVEURS

(30) Priorität: 25.10.2007 DE 102007051170
(43) Veröffentlichungstag der Anmeldung: 07.07.2010
(73) Patentinhaber: Fujitsu Technology Solutions Intellectual Property GmbH, 80807 München (DE)
(72) Erfinder: HEINRICHS, Hans-Jürgen, 33184 Altenbeken (DE)
(74) Vertreter: Epping - Hermann - Fischer
(86) Internationale Anmeldenummer: PCT/EP2008/063557
(87) Internationale Veröffentlichungsnummer: WO 2009/053252

(56) Entgegenhaltungen:
- EP-A1- 0 619 548
- WO-A1-00/41073
- US-A1- 2003 002 497
- US-A1- 2007 204 088
- ANONYMOUS: "I2C: Inter-Integrated Circuit" WIKIPEDIA, DIE FREIE ENZYKLOPÄDIE, 5. Dezember 2008 (2008-12-05), XP002518500 Gefunden im Internet: URL:http://de.wikipedia.org/wiki/I%C2%B2C> [gefunden am 2009-02-11]

## Beschreibung

Die Erfindung betrifft einen Server mit einer Schnittstelle zum Anschluss an ein Serversystem und ein Serversystem, aufweisend einen Baugruppenträger zur Aufnahme mehrerer Server mit einem seriellen Management-Bus und mehrere Server, die über serielle Schnittstellen an den Management-Bus angeschlossen sind, wobei ein Server als Managementserver und andere Server als Rechenserver eingerichtet sind.

In Serversystemen, beispielsweise Blade-Serversystemen, müssen alle Bladeserver auf verschiedenste Art und Weise miteinander kommunizieren, um Nutzdaten, Statusinformationen und Steuerbefehle auszutauschen. Der Austausch von Nutzdaten kann z. B. über Ethernet gemäß einer TCP/IP-Infrastruktur erfolgen. Die Ansteuerung der Server zu Verwaltungszwecken erfolgt jedoch meist über eine getrennte Hardware-Schnittstelle, beispielsweise einen Management-Bus. In der Regel übernimmt in einem Blade-Serversystem ein Server, der so genannte Managementserver, das Management anderer Server, die als Rechenserver eingerichtet sind.

Der Managementserver hat u. a. die Aufgabe, an einem Management-Bus angeschlossene Rechenserver zu erkennen, diese zu adressieren und über Hardwarebefehle zu steuern. Ein Steuerbefehl kann beispielsweise das Ein- oder Ausschalten eines Rechenservers oder einer bestimmten Funktion des Rechenservers beinhalten.

Aus US 2007/0204088 A1 ist eine Management-Bus-Struktur zur Kommunikation zwischen Blade-Servern und Server-Modulen bekannt. Ein Datenaustausch erfolgt unter anderem über einen I2C-Bus.

Aus der Druckschrift US 2003/0002497 A1 sind ein Verfahren und ein Gerät zum Übertragen von Datenpaketen zwischen einem Server und einem Client bekannt. Dies kann das Empfangen eines Datenpakets von einem Stapel des Servers, das Senden eines Bestätigungspakets an den Stapel und ein Übertragen des Datenpakets über einen I/O-Bus des Servers umfassen. Das Bestätigungspaket kann an den Stapel gesendet werden, ohne das Bestätigungspaket über den I/O-Bus zu senden.

Der Einsatz eines seriellen, bidirektionalen Management-Busses wie des I2C-Busses hat den Nachteil, dass bei einer Fehlfunktion eines Server der gesamte Bus blockiert ist und andere Server keine Möglichkeit mehr besitzen, auf den Bus zuzugreifen, bis der Fehler behoben ist.

Ein unidirektionaler, paralleler Bus vermeidet zwar eine Blockade des gesamten Busses bei Fehlfunktion eines Rechenservers, da lediglich der Managementserver sendet, benötigt jedoch eine große Anzahl Datenleitungen und Pins an den Steckerkontakten zwischen dem Bus und den angeschlossenen Servern. Außerdem bedarf es einiger zusätzlicher Logikbausteine und spezieller Software-Treiber auf den Servern, da der Managementserver und die Rechenserver in der Regel dazu eingerichtet sind über einen I2C-Bus zu kommunizieren.

Daher liegt der Erfindung die Aufgabe zugrunde, einen Server, sowie ein Serversystem anzugeben, wodurch eine einfache und hinsichtlich der Fehleranfälligkeit verbesserte Steuerung mehrerer Server in einem Serversystem möglich ist.

Diese Aufgabe wird erfindungsgemäß mittels eines Servers der eingangs genannten Art dadurch gelöst, dass der Server eine CPU, einen Bustreiber und eine Mikrocontrollereinheit aufweist, wobei die CPU einen Steuerbefehl erzeugt, diesen Steuerbefehl an den Bustreiber sendet, der die internen bidirektionalen Signale in unidirektionale Signale umwandelt und diese an einen Management-Bus des Serversystems sendet und die Mikrocontrollereinheit eine Quittierungsvorrichtung darstellt, die nach Versenden des Steuerbefehls an den Management-Bus des Serversystems durch den Server ein Aknowledge-Signal zum Bestätigen des Steuerbefehls erzeugt. Weiterhin wird die Aufgabe mittels eines Serversystems der eingangs genannten Art dadurch gelöst, dass das Serversystem dergestalt eingerichtet ist, dass Informationen unidirektional vom Managementserver über den seriellen Management-Bus zu den Rechenservern übertragen werden und der Managementserver eine CPU, einen Bustreiber und eine Mikrocontrollereinheit aufweist, wobei die CPU einen Steuerbefehl erzeugt, diesen Steuerbefehl an den Bustreiber sendet, der die internen bidirektionalen Signale in unidirektionale Signale umwandelt und diese an einen Management-Bus des Serversystems sendet und die Mikrocontrollereinheit eine Quittierungsvorrichtung darstellt, die nach Versenden des Steuerbefehls an den Management-Bus ein Aknowledgesignal zum Bestätigen des Steuerbefehls erzeugt.

Die erfindungsgemäßen Lösungen haben den Vorteil, dass der Management-Bus lediglich vom Managementserver beansprucht wird und damit wesentlich robuster auf Störungen der Rechenserver reagiert, die lediglich Empfangsmöglichkeit besitzen. Durch den seriellen Bus reduziert sich auch die Anzahl benötigter Anschlusspins, da wesentlich weniger Leitungen unterschieden werden müssen. Die Quittierungsvorrichtung erlaubt dem Managementserver, trotz der Unidirektionalität des Management-Busses eine Bestätigung der an einen Rechenserver gesendeten Steuerbefehle ins Protokoll einzubinden. So können außer für die Quittierungsvorrichtung Standard-Komponenten für I2C-Busse verwendet werden.

Bevorzugt basiert das Protokoll zum Versenden von Steuerbefehlen über den Management-Bus auf dem I2C-Standard, wobei das Aknowledgesignal der Quittierungsvorrichtung dem Aknowledgesignal gemäß I2C-Standard entspricht. Dadurch ist es möglich, auf I2C-Standard basierende Softwaretreiber zu verwenden.

Vorzugsweise weist das Serversystem ein oder mehrere weitere Daten-Busse auf, die Server miteinander verbinden, wobei Daten über die Daten-Busse bidirektional zwischen dem Managementserver und den Rechenservern übertragen werden können. Das heißt, dass vor allem die Hardwaresteuerung unidirektional zwischen Managementserver und Rechenservern stattfindet und sonstige Informationen zwischen den angeschlossenen Servern bidirektional über die Daten-Busse ausgetauscht werden. Bevorzugt ist ein Rechenserver dazu eingerichtet, im laufenden Betrieb des Serversystems angeschlossen oder entfernt zu werden. Dies hat den Vorteil, dass Komponenten des Serversystems, beispielsweise aus Wartungsgründen, entfernt und anschließend wieder montiert werden können, ohne dass das gesamte System heruntergefahren und ausgeschaltet werden muss. So bleibt das System auch bei Modifikationen unterbrechungsfrei verfügbar.

Weitere vorteilhafte Ausgestaltungen sind in der Figurenbeschreibung sowie in den Unteransprüchen offenbart.

Nachfolgend wird die Erfindung anhand mehrerer Zeichnungen näher erläutert.

Es zeigen:
- Figur 1: ein schematisiertes Blockschaltbild einer Anordnung, bestehend aus Managementserver, Management-Bus und mehreren Rechenservern und
- Figur 2: ein schematisiertes Blockschaltbild einer weiteren möglichen Anordnung eines Managementservers, zweier Bus-Leitungen und mehrerer Rechenserver.

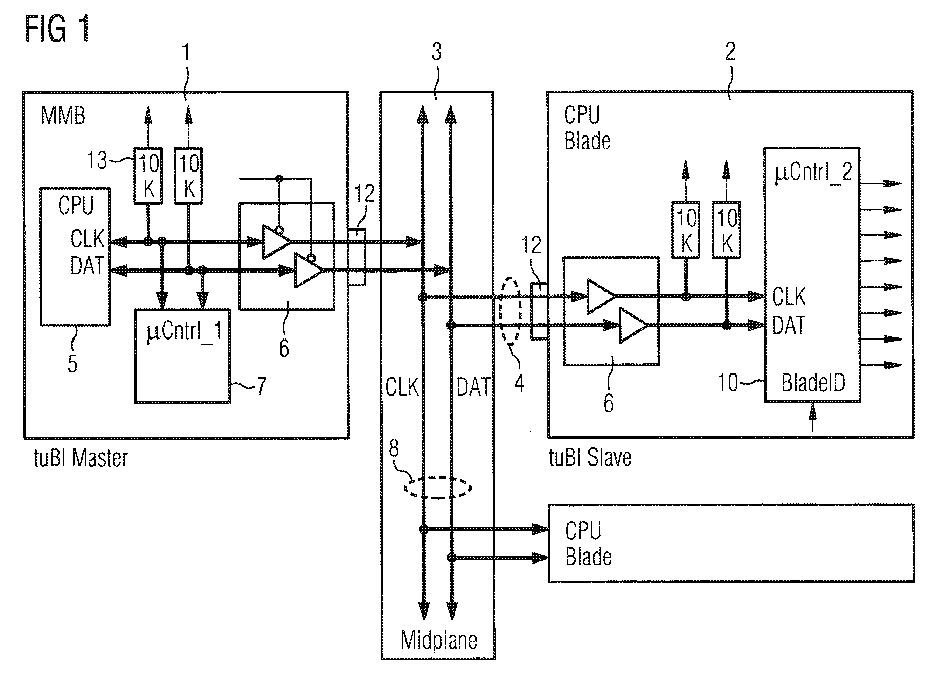

Figur 1 zeigt ein schematisiertes Blockschaltbild einer möglichen Anordnung, bestehend aus einem Managementserver 1, einem Management-Bus 8, der auf einem Baugruppenträger 3 verlegt ist, sowie mehreren Rechenservern 2. Der Managementserver 1 sowie die Rechenserver 2 sind über Schnittstellen 12 und unidirektionale Datenleitungen 4 an den Management-Bus 8 angeschlossen. Aufgrund der Unidirektionalität ergibt sich lediglich ein Datenfluss vom Managementserver 1 zu den Rechenservern 2. Die Rechenserver 2 werden über Hardwarebefehle gesteuert, die vom Managementserver 1 an den Management-Bus 8 gesendet werden, über den Management-Bus 8 übertragen und von den Rechenservern 2 empfangen werden. Der Management-Bus 8 umfasst zwei Leitungen für ein Taktsignal CLK und Datensignale DAT. Zusätzlich weist der Managementserver 1 einen TTL-Baustein 6 auf, der als Bustreiber dient. Die Rechenserver 2 weisen ebenfalls je einen TTL-Baustein 6 auf, der die Signale vom Management-Bus 8 empfängt und an eine Mikrocontrollereinheit 10 zur Interpretation weitergibt. Der Managementserver 1 weist eine Mikrocontrollereinheit 7 auf, die eine Quittierungsvorrichtung darstellt und ein Aknowledge-Signal erzeugt, sobald ein Steuerbefehl vom Managementserver 1 an den Management-Bus 8 gesendet wurde.

Beispielsweise generiert die CPU 5 des Managementservers 1 einen Steuerbefehl, der in Form entsprechender, zwischen High und Low wechselnder Spannungspegel an den TTL-Baustein 6 gesendet wird. Durch zwei Pull-up-Widerstände 13 an der Taktleitung CLK und der Datenleitung DAT sind definierte Zustände sichergestellt, wobei die Pull-up-Widerstände 13 hier beispielhaft zu 10 kOhm dimensioniert sind. Der TTL-Baustein 6 wandelt die internen bidirektionalen Signale in unidirektionale Signale um und sendet diese über die Schnittstelle 12 an den Management-Bus 8, wobei die dem Taktsignal CLK entsprechenden Pegel der CLK-Leitung und die den Datensignalen DAT entsprechenden Pegel der DAT-Leitung des Management-Busses 8 übergeben werden.

Gleichzeitig erzeugt die Quittierungsvorrichtung 7 des Managementservers 1 ein Aknowledge-Signal zur Bestätigung des versendeten Steuerbefehls. Dieses Aknowledgesignal ist notwendig, da die Rechenserver 2 lediglich empfangen können, und wird zur Kompatibilität mit gemäß dem I2C-Standard operierenden Softwaretreibern benötigt.

Durch den Baustein 6 werden Steuerbefehle vom Managementserver 1 an die entsprechenden Rechenserver 2 versendet, wobei das Serversystem ein zum I2C-Standard kompatibles Protokoll aufweist. So ist eine Entkoppelung des internen Busses vom Management-Bus gegeben.

Die Logikpegel laufen über die Leitungen DAT und CLK des Management-Busses 8 zu einem adressierten Rechenserver 2, der die Signale von den Leitungen DAT und CLK des Management-Busses 8 über unidirektionale Datenleitungen 4 an seiner Schnittstelle 12 empfängt. Im TTL-Baustein 6 des Rechenservers 2 werden die Signale anschließend wieder in interne Bussignale umgewandelt und über zwei mit Pull-up-Widerständen 13 versehene Leitungen CLK und DAT an die Mikrocontrollereinheit 10 gesendet. Die Mikrocontrollereinheit 10 interpretiert anschließend die empfangenen Signale als Steuerbefehl.

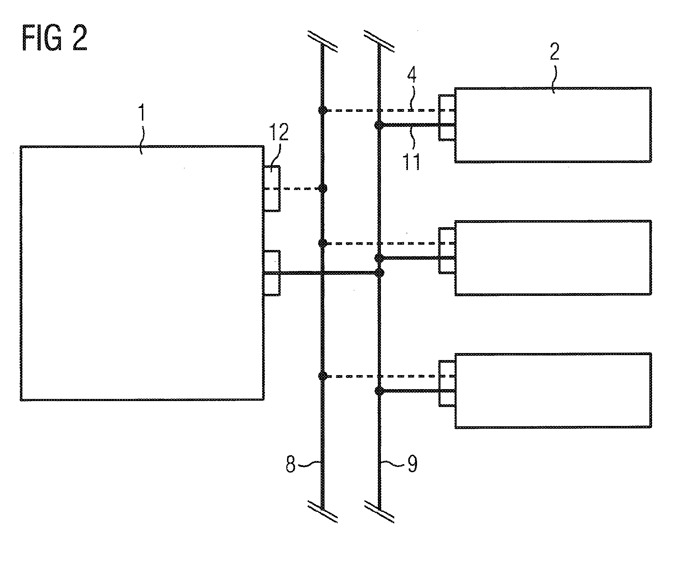

Figur 2 zeigt ein Blockschaltbild eines erweiterten Ausführungsbeispiels eines Managementservers 1, eines Management-Busses 8 und eines Daten-Busses 9, sowie mehreren Rechenservern 2. Alle Server 1 und 2 sind über Schnittstellen 12 an die beiden Busse 8 und 9 angeschlossen. Hierbei werden Steuerbefehle vom Managementserver 1 über unidirektionale Datenleitungen 4, gestrichelt angedeutet, gemäß Figur 1 an die entsprechenden Rechenserver 2 gesendet. Zusätzlich ist es dem Managementserver 1 und den Rechenservern 2 möglich, über bidirektionale Datenleitungen 11 an einem Daten-Bus 9 Informationen auszutauschen. Beispielsweise könnte ein Managementserver 1 über den Management-Bus 8 einen Einschaltbefehl an einen Rechenserver 2 versenden, wobei sich der Rechenserver 2 einschaltet und anschließend ein Datenpaket über den Daten-Bus 9 an den Managementserver 1 zurückschickt. So erfolgt die Hardwaresteuerung der Rechenserver 2 über den robusten unidirektionalen Management-Bus 8 und der Datenaustausch zwischen allen Servern 1 und 2 über den bidirektionalen Daten-Bus 9.

In nicht dargestellten Ausführungsformen könnte ein Serversystem auch mehrere Managementserver 1 enthalten, wobei beispielsweise über ein zusätzliches Steuersignal die Priorität der einzelnen Managementserver 1 vergeben wird. Dadurch soll vermieden werden, dass mehrere Managementserver 1 gleichzeitig steuernd in das System eingreifen. Ein nicht aktiver Managementserver 1 kann dabei entweder als Rechenserver 2 funktionieren oder sich in einem Ruhezustand befinden, bis er erneut die Priorität erhält, das System als aktiver Managementserver 1 zu steuern. Zudem wäre ein Steuerbefehl denkbar, über den alle Rechenserver 2 gleichzeitig angesteuert werden können. Weiterhin könnten der oder die Managementserver neben ihren Verwaltungs- und Steuerungsaufgaben Rechenaufgaben wie die Rechenserver übernehmen.

### Bezugszeichenliste

- 1: Managementserver
- 2: Rechenserver
- 3: Baugruppenträger
- 4: unidirektionale Datenleitung
- 5: CPU
- 6: TTL-Baustein
- 7: Quittierungsvorrichtung
- 8: Management-Bus
- 9: Daten-Bus
- 10: Mikrocontrollereinheit
- 11: bidirektionale Datenleitung
- 12: Schnittstelle
- 13: Pull-up-Widerstand
- CLK: Taktleitung des Management-Busses
- DAT: Datenleitung des Management-Busses

## Patentansprüche

1. Server (1) mit einer Schnittstelle (12) zum Anschluss an ein Serversystem,
der Server (1) weist eine CPU (5), einen Bustreiber (6) und eine Mikrocontrollereinheit auf, wobei die CPU (5) eine Steuerbefehl er-zeugt, diesen Steuerbefehl an den Bustreiber (6) sendet, **dadurch gekennzeichnet**, das der Bustreiber die internen bidirektionalen Signale in unidirektionale Signale umwandelt und diese an einen Management-Bus (8) des Serversystems sendet und die Mikrocontrollereinheit eine Quittierungsvorrichtung (7) darstellt, die nach Versenden des Steuerbefehls an den Management-Bus (8) des Serversystems durch den Server (1) ein Aknowledge-Signal zum Bestätigen des Steuerbefehls erzeugt.

2. Serversystem, aufweisend einen Baugruppenträger (3) zur Aufnahme mehrerer Server (1, 2) mit einem seriellen Management-Bus (8) und mehreren Servern (1, 2), die über serielle Schnittstellen (12) an den Management-Bus (8) angeschlossen sind, wobei ein Server als Managementserver (1) und andere Server als Rechenserver (2) eingerichtet sind, **dadurch gekennzeichnet, dass**
das Serversystem dergestalt eingerichtet ist, dass Informationen unidirektional vom Managementserver (1) über den seriellen Management-Bus (8) zu den Rechenservern (2) übertragen werden und der Managementserver (1) eine CPU (5) einen Bustreiber (6) und eine Mikrocontrollereinheit aufweist, wobei die CPU einen Steuerbefehl erzeugt, diesen Steuerbefehl an den Bustreiber sendet, der die internen bidirektionalen Signale in unidirektionale Signale umwandelt und diese an den Management-Bus (8) des Serversystems sendet und die Mikrocontrollereinheit eine Quittierungsvorrichtung (7) darstellt, die nach Versenden des Steuerbefehls an den Management-Bus (8) ein Aknowledgesignal zum Bestätigen des Steuerbefehls erzeugt.

3. Serversystem nach Anspruch 2, **dadurch gekennzeichnet, dass** das Protokoll zum Versenden von Steuerbefehlen über den Management-Bus (8) auf dem I2C-Standard basiert, wobei das Aknowledge-Signal der Quittierungsvorrichtung (7) dem Aknowledgesignal gemäß I2C-Standard entspricht.

4. Serversystem nach Anspruch 2 oder 3, **dadurch gekennzeichnet, dass**
der Management-Bus (8) zwei Leitungen umfasst, wobei eine Leitung für ein Taktsignal (CLK) und die andere Leitung für ein Datensignal (DAT) vorgesehen ist.

5. Serversystem nach einem der Ansprüche 2 bis 4, **dadurch gekennzeichnet, dass** das Serversystem ein oder mehrere weitere Daten-Busse (9) aufweist, die die Server (1, 2) miteinander verbinden, wobei Daten über die Daten-Busse (9) bidirektional zwischen dem Managementserver (1) und den Rechenservern (2) übertragen werden können.

6. Serversystem nach einem der Ansprüche 2 bis 5, **dadurch gekennzeichnet, dass** ein Rechenserver (2) dazu eingerichtet ist, im laufenden Betrieb des Serversystems angeschlossen oder entfernt zu werden.

## Claims

1. Server (1) having an interface (12) for connecting to a server system,
the server (1) having a CPU (5), a bus driver (6) and a microcontroller unit, the CPU (5) generating a control command and transmitting this control command to the bus driver (6), **characterized in that** the bus driver converts the internal bidirectional signals into unidirectional signals and transmits the latter to a management bus (8) of the server system, and the microcontroller unit constitutes an acknowledgement apparatus (7) which, after the server (1) has transmitted the control command to the management bus (8) of the server system, generates an acknowledge signal for confirming the control command.

2. Server system having a mounting rack (3) for accommodating a plurality of servers (1, 2), with a serial management bus (8) and a plurality of servers (1, 2) which are connected to the management bus (8) via serial interfaces (12), one server being set up as a management server (1) and other servers being set up as computing servers (2), **characterized in that**
the server system is set up in such a manner that information is unidirectionally transmitted from the management server (1) to the computing servers (2) via the serial management bus (8), and the management server (1) has a CPU (5), a bus driver (6) and a microcontroller unit, the CPU generating a control command and transmitting this control command to the bus driver which converts the internal bidirectional signals into unidirectional signals and transmits the latter to the management bus (8) of the server system, and the microcontroller unit constituting an acknowledgement apparatus (7) which, after the control command has been transmitted to the management bus (8), generates an acknowledge signal for confirming the control command.

3. Server system according to Claim 2, **characterized in that** the protocol for transmitting control commands via the management bus (8) is based on the I2C standard, the acknowledge signal from the acknowledgement apparatus (7) corresponding to the acknowledge signal according to the I2C standard.

4. Server system according to Claim 2 or 3, **characterized in that**
the management bus (8) comprises two lines, one line being intended for a clock signal (CLK) and the other line being intended for a data signal (DAT).

5. Server system according to one of Claims 2 to 4, **characterized in that** the server system has one or more further data buses (9) which connect the servers (1, 2) to one another, in which case data can be bidirectionally transmitted between the management server (1) and the computing servers (2) via the data buses (9).

6. Server system according to one of Claims 2 to 5, **characterized in that** a computing server (2) is set up to be connected or removed during ongoing operation of the server system.

## Revendications

1. Serveur (1) comportant une interface (12) de connexion à un système serveur, le serveur (1) comprenant une unité centrale (5), un pilote de bus (6) et une unité à microcontrôleur, dans lequel l'unité centrale (5) génère une instruction de commande, envoie cette instruction de commande au pilote de bus (6), **caractérisé en ce que** le pilote de bus convertit les signaux bidirectionnels internes en des signaux unidirectionnels et les envoie à un bus de gestion (8) du système serveur et l'unité à microcontrôleur est un dispositif d'accusé de réception (7) qui, après avoir envoyé l'instruction de commande au bus de gestion (8) du système serveur au moyen du serveur (1) génère un signal d'accusé de réception pour confirmer l'instruction de commande.

2. Système serveur comprenant un bâti (3) destiné à recevoir une pluralité de serveurs (1, 2) comportant un bus de gestion série (8) et une pluralité de serveurs (1, 2) qui sont raccordés par l'intermédiaire d'interfaces série (12) au bus de gestion (8), dans lequel un serveur est configuré en tant que serveur de gestion (1) et d'autres serveurs sont configurés en tant que serveurs de calcul (2), **caractérisé en ce que**
le système serveur est conçu de telle manière que des informations sont transférées de manière unidirectionnelle depuis le serveur de gestion (1), par l'intermédiaire du bus de gestion série (8), aux serveurs de calcul (2) et que le serveur de gestion (1) comporte une unité centrale (5), un pilote de bus (6) et une unité à microcontrôleur, dans lequel la CPU génère un instruction de commande, envoie cette instruction de commande au pilote de bus, qui convertit les signaux bidirectionnels internes en signaux unidirectionnels, et les envoie au bus de gestion (8) du système serveur et l'unité à microcontrôleur est un dispositif d'accusé de réception (7) qui, après l'envoi de l'instruction de commande au bus de gestion (8), génère un signal d'accusé de réception pour confirmer l'instruction de commande.

3. Système serveur selon la revendication 2, **caractérisé en ce que** le protocole d'envoi d'instructions de commande par l'intermédiaire du bus de gestion (8) est basé sur la norme I2C, dans lequel le signal d'accusé de réception du dispositif d'accusé de réception (7) correspond au signal d'accusé de réception de la norme I2C.

4. Système serveur selon la revendication 2 ou 3, **caractérisé en ce que** le bus de gestion (8) comporte deux lignes, une ligne étant prévue pour un signal d'horloge (CLK) et l'autre ligne étant prévue pour un signal de données (DAT).

5. Système serveur selon l'une quelconque des revendications 2 à 4, **caractérisé en ce que** le système serveur comprend un ou plusieurs autres bus de données (9) reliant les serveurs (1, 2) les uns aux autres, dans lequel les données peuvent être transmises de manière bidirectionnelle par l'intermédiaire des bus de données (9) entre le serveur de gestion (1) et les serveurs de calcul (2).

6. Système serveur selon l'une quelconque des revendications 2 à 5, **caractérisé en ce qu'**un serveur de calcul (2) est conçu pour être connecté ou retiré pendant le fonctionnement du système serveur.
